# EUROPÄISCHE PATENTSCHRIFT

(11) **EP 1 394 024 B1**
(45) Veröffentlichungstag und Bekanntmachung des Hinweises auf die Patenterteilung: **31.12.2008**
(21) Anmeldenummer: 03019445.0
(22) Anmeldetag: 28.08.2003
(51) Int. Cl.: B62D 59/04

(54) **Fahrzeuganhängerrangierantrieb**
Drive device for manoeuvring a trailer
Dispositif d'entraînement pour la manoeuvre d'une remorque

(30) Priorität: 29.08.2002 DE 20213534 U
(43) Veröffentlichungstag der Anmeldung: 03.03.2004
(73) Patentinhaber: Truma Gerätetechnik GmbH & Co. KG, 85640 Putzbrunn (DE)
(72) Erfinder: Beck, Gerhard, 89343 Jettingen-Scheppach (DE); Fink, Bernd, 89359 Kötz (DE)
(74) Vertreter: Ernicke, Hans-Dieter

(56) Entgegenhaltungen:
- EP-A- 0 827 898
- US-A- 4 386 675

## Beschreibung

Die Erfindung betrifft einen Fahrzeuganhängerrangierantrieb mit den Merkmalen im Oberbegriff des Hauptanspruchs.

Ein solcher Fahrzeuganhängerrangierantrieb ist aus der EP 0 827 898 A1 bekannt. Er besteht aus einer Antriebseinheit mit einem Motor und einem als Reibrad ausgebildeten Antriebselement, welche an einer fahrzeugfesten Konsole mittels einer Führung beweglich gelagert ist und an das Fahrzeugrad für den Reib- und Antriebskontakt zugestellt werden kann. Die Zustellung erfolgt von Hand mittels einer federbelasteten schwenkbaren Lagerung der Antriebseinheit. Der Fahrzeuganhängerrangierantrieb lässt sich mittels einer Konsole am Fahrgestell des Anhängers in Radnähe befestigen, wobei für jedes Anhängerrad ein eigener Rangierantrieb vorhanden ist. Mittels einer Fernsteuerung lassen sich die Fahrzeuganhängerrangierantriebe bedienen und unabhängig voneinander betätigen. Je nach Drehrichtung und der gewünschten Relativbeziehung der Fahrzeuganhängerrangierantriebe untereinander kann der Anhänger geradeaus oder in einer beliebigen Kurve bewegt werden.

Aus der US-A-4,386,675 ist ein elektrischer Hilfsantrieb für leichtgewichtige und pedalbetätigte Fahrzeuge, insbesondere Fahrräder oder Dreiräder bekannt. Bei diesem Hilfsantrieb findet eine automatische Zustellung einer Antriebswalze beim Einschalten des elektrischen Antriebsmotors unter Ausnutzung der Reaktionskraft des Motors statt. Der Motor ist mit der Antriebswelle und der Antriebsrolle an einer Schwenkplatte gelagert und schwenkt um deren Lagerachse. Sobald die Antriebsrolle in Kontakt mit dem Radumfang kommt, wandert sie auf dem Rad rückwärts und zieht sich selbst in die Eingriffsstellung. Ein Anschlag begrenzt den Schwenkweg. Bei einem Abschalten des Antriebsmotors wird der Reib- und Antriebskontakt durch ein Gegengewicht aufgehoben, welches die Motoreinheit zurückdreht. Die Eingriffsstellung der Antriebsrolle am Fahrzeugrad besteht nur während der Einschaltdauer des Motors und nur in einer Drehrichtung des Antriebs.

Es ist Aufgabe der vorliegenden Erfindung, einen besseren Fahrzeuganhängerrangierantrieb aufzuzeigen.

Die Erfindung löst diese Aufgabe mit den Merkmalen im Hauptanspruch.
Die automatische Zustellvorrichtung hat den Vorteil, dass zur Betätigung des Fahrzeuganhängerrangierantriebs keine von außen manuell einwirkenden Hand- und Fußkräfte erforderlich sind. Hierdurch werden auch die von einer manuellen Betätigung hervorgerufenen Erschütterungen des Anhängers vermieden, die in vielen Fällen unerwünscht sind. Zudem bedarf es bei der erfindungsgemäßen Zustellvorrichtung keiner besonderen Werkzeuge oder Hilfsmittel zu deren Betätigung und keines Unterbringungsaufwandes für die Werkzeuge. Die vorzugsweise ohnehin vorhandene Fernbedienung für den Fahrzeuganhängerrangierantrieb reicht auch für die Zustellung der Antriebseinheit aus.

Ein besonderer Vorteil liegt in der Koppelung der Zustellvorrichtung mit dem Antrieb der Antriebseinheit. Hierdurch werden einerseits zusätzliche Antriebsmittel für die Zustellvorrichtung eingespart. Andererseits wird die Bedienung vereinfacht, weil mit der Betätigung der Fernbedienung oder einer anderen Steuereinheit für die Antriebseinheit automatisch auch die Zustellung bewirkt wird.

Die Zustellvorrichtung kann in unterschiedlicher Weise ausgebildet sein. In der bevorzugten Ausführungsform ist sie mit einer Kurvenscheibe ausgerüstet, die über ihre Spiral- und Schneckenform durch die Drehung einen Vorschub der Antriebseinheit unter Abstützung an einem Bolzen bewirkt. Durch die Kurvenscheibe wird ein sehr weicher und erschütterungsarmer Vorschub erzeugt. Außerdem ist es in Verbindung mit dem axial verschiebbaren, federbelasteten Bolzen von Vorteil, dass die Kurvenscheibe aus jeder beliebigen Drehstellung heraus wieder erneut den Vorschub starten kann. Ein motorisches Rückbewegen in eine Ausgangsposition ist nicht erforderlich.

Für die Umsetzung der von der drehenden Kurvenscheibe erzeugten Vorschubkraft gibt es verschiedene konstruktive Möglichkeiten und unterschiedliche Ausgestaltungen von Führungen zwischen der beweglichen Antriebseinheit und der Konsole. Die Führungen sind vorzugsweise als Langlochführungen mit einer reinen Schiebefunktion oder einer kombinierten Schiebe- und Schwenkfunktion ausgeführt. Die verschiedenen Führungen erlauben es, die Kurvenscheibe nach erfolgter Zustellung der Antriebseinheit an das Fahrzeugrad außer Eingriff mit dem Bolzen zu bringen und dadurch im weiteren Rangierbetrieb die volle kinematische Freiheit für die Drehbewegungen des Antriebselementes, insbesondere einer Reibwalze, zu haben. Über eine manuell oder per Fuß betätigbare Rückstelleinrichtung kann auf bequeme und einfache Weise der Fahrzeuganhängerrangierantrieb wieder in seine Ruheposition gebracht werden. Der Bediener kann hierbei auch per Augenschein die korrekte Rückstellung überprüfen.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: Einen Fahrzeuganhängerrangierantrieb in Verbindung mit Teilen eines Anhängers in Seitenansicht und in Ruhestellung,
- Figur 2:: den Fahrzeuganhängerrangierantrieb von Figur 1 in Betriebsstellung am Fahrzeugrad,
- Figur 3:: eine Draufsicht auf den Fahrzeuganhängerrangierantrieb von Figur 1,
- Figur 4:: eine abgebrochene Draufsicht auf den Fahrzeuganhängerrangierantrieb in Ruhestellung nach Rückkehr aus der Betriebsstellung mit zurückgezogenem Bolzen,
- Figur 5:: eine Variante des Fahrzeuganhängerrangierantriebs in Seitenansicht und in Ruheposition,
- Figur 6:: den Fahrzeuganhängerrangierantrieb von Figur 5 in Betriebsstellung,
- Figur 7:: eine Draufsicht auf den Fahrzeuganhängerrangierantrieb von Figur 5 in Ruhestellung bei Beginn der Zustellung und
- Figur 8:: eine Draufsicht auf den Fahrzeuganhängerrangierantrieb von Figur 7 nach Rückkehr aus der Betriebsstellung.

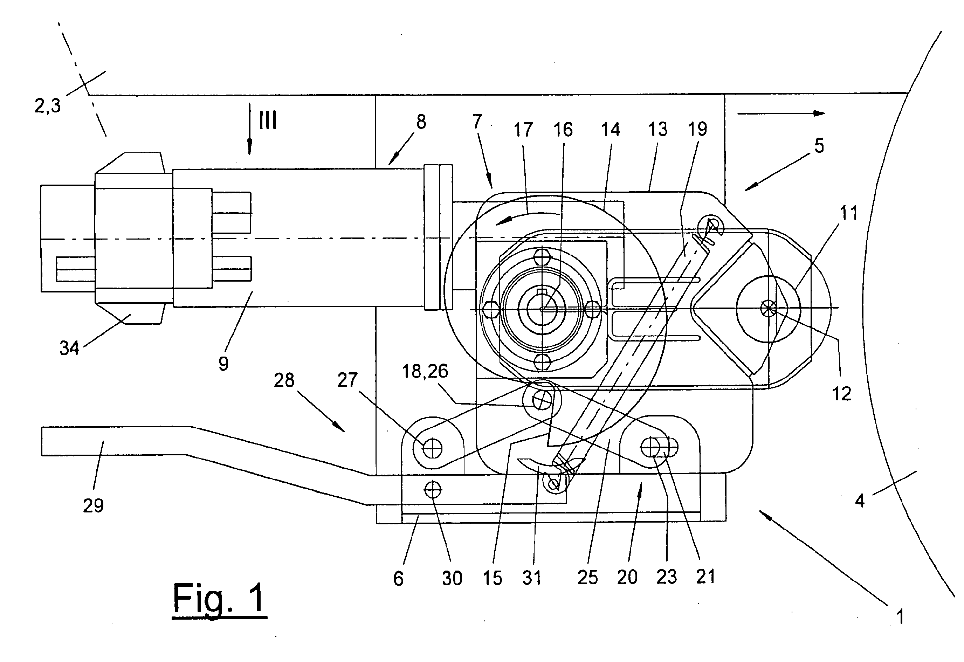

Figur 1 bis 4 und 5 bis 8 zeigen jeweils einen Fahrzeuganhängerrangierantrieb (1) für einen Anhänger (2), in zwei verschiedenen Ausführungsformen. Der Fahrzeuganhängerrangierantrieb (1) dient als Rangierantrieb zum motorischen Bewegen der Fahrzeugräder (4) eines abgekuppelten und abgestellten Anhängers (2). Vorzugsweise ist hierbei auf beiden Seiten des Anhängers (2) jeweils ein Fahrzeuganhängerrangierantrieb (1) angeordnet, der jeweils auf ein Fahrzeugrad (4) einwirkt. Für Tandemachsen mit vier Rädern können vier Fahrzeuganhängerrangierantriebe (1) vorhanden sein. Die Fahrzeuganhängerrangierantriebe (1) sind unabhängig voneinander steuerbar, so dass die linken und rechten Fahrzeugräder (4) beliebig vor und zurück bewegt werden können. Auf diese Weise kann der Anhänger (2) in der gewünschten Weise geradeaus vor- und zurück gefahren werden. Er kann aber auch Kurven mit beliebigem Radius ausführen, wobei die Fahrzeugräder (4) für eine Drehung mit engem Radius und gegebenenfalls auch im Stand gegenläufig bewegt werden können. Die Betätigung der Fahrzeuganhängerrangierantriebe (1) erfolgt über eine geeignete Steuerung, vorzugsweise eine Fernbedienung, wobei an jedem Fahrzeuganhängerrangierantrieb (1) ein geeigneter vorzugsweise drahtloser Empfänger (34) angeordnet ist.

Wie Figur 1 in einer abgebrochenen und schematischen Seitenansicht verdeutlicht, ist der Fahrzeuganhängerrangierantrieb (1) mittels einer Konsole (6) am Fahrgestell (3) des Anhängers (2) in der Nähe des Fahrzeugrades (4) in geeigneter Weise starr oder verstellbar befestigt. Die Befestigung kann zum Beispiel an einem Längsholm des Fahrgestells oder Anhängerrahmens erfolgen. Der Fahrzeuganhängerrangierantrieb (1) befindet sich hierbei wahlweise vor oder hinter dem Fahrzeugrad (4) und wirkt von der Seite her auf das Rad (4) ein. Die Konsole (6) ist hierzu beispielsweise hängend an der Rahmenunterseite befestigt.

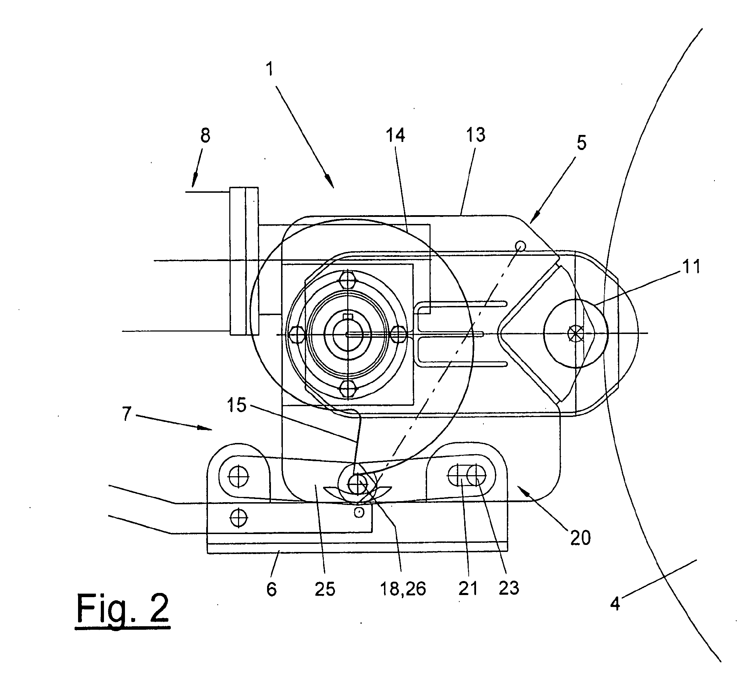

Der Fahrzeuganhängerrangierantrieb (1) besitzt eine Antriebseinheit (5), die mittels einer automatischen und von der Antriebseinheit (5) betätigten Zustellvorrichtung (7) aus der in Figur 1 gezeigten Ruhestellung in die in Figur 2 dargestellte Betriebsstellung am Fahrzeugrad (4) bewegt werden kann. Die Antriebseinheit (5) ist hierzu über eine Führung (20) beweglich an der Konsole (6) gelagert und geführt.

Die Antriebseinheit (5) besteht aus einem Antrieb (8), der einen Motor (9) mit einem gegebenenfalls vorgeschalteten Getriebe aufweist, wobei der Motor (9) direkt oder unter Einschaltung einer Übertragungseinrichtung (10), zum Beispiel einen Kettentrieb oder Riementrieb, mit einem drehenden Antriebselement (11) verbunden ist, welches auf das Fahrzeugrad (4) in geeigneter Weise einwirkt. Im bevorzugten Ausführungsbeispiel ist das Antriebselement (11) als quer liegende Reibwalze ausgebildet, deren Achse (12) im Wesentlichen parallel zur Radachse ausgerichtet ist, wobei die Reibwalze (11) einen aufgerauten und reibgünstigen Belag zur Übertragung der Antriebskräfte auf das Fahrzeugrad (4) aufweist. Die Achse (12) der Reibwalze (11) ist außerdem vorzugsweise parallel zur Achse (16) der Abtriebswelle des Motors (9) bzw. seines vorgeschalteten Getriebes ausgebildet. Die beiden Kettenräder des Kettentriebs (10) sind hierbei ebenfalls auf die Achsen (12,16) außenseitig aufgesteckt.

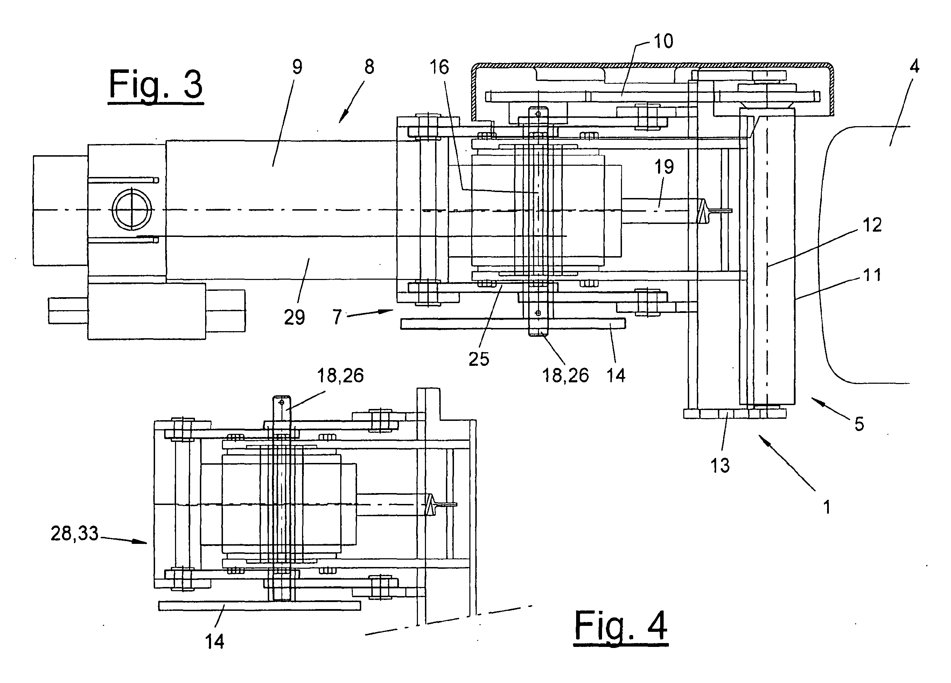

Der Motor (9) ist vorzugsweise als fernsteuerbarer Elektromotor, insbesondere Gleichstrommotor mit Niederspannung von z. B. 12 V oder 24 V, ausgebildet. Die Stromversorgung erfolgt über eine anhängerseitige Batterie. Dies kann alternativ auf beliebige andere geeignete Weise geschehen. Die Antriebseinheit (5) besitzt ein Gestell (13) in dem die genannten Komponenten befestigt sind, wobei das Gestell (13) auch geeignete Lagerschilde zur beidseitigen Lagerung der Reibwalze (11) aufweist. Die Draufsicht von Figur 3 gemäß Pfeil III von Figur 1 zeigt diese Anordnung.

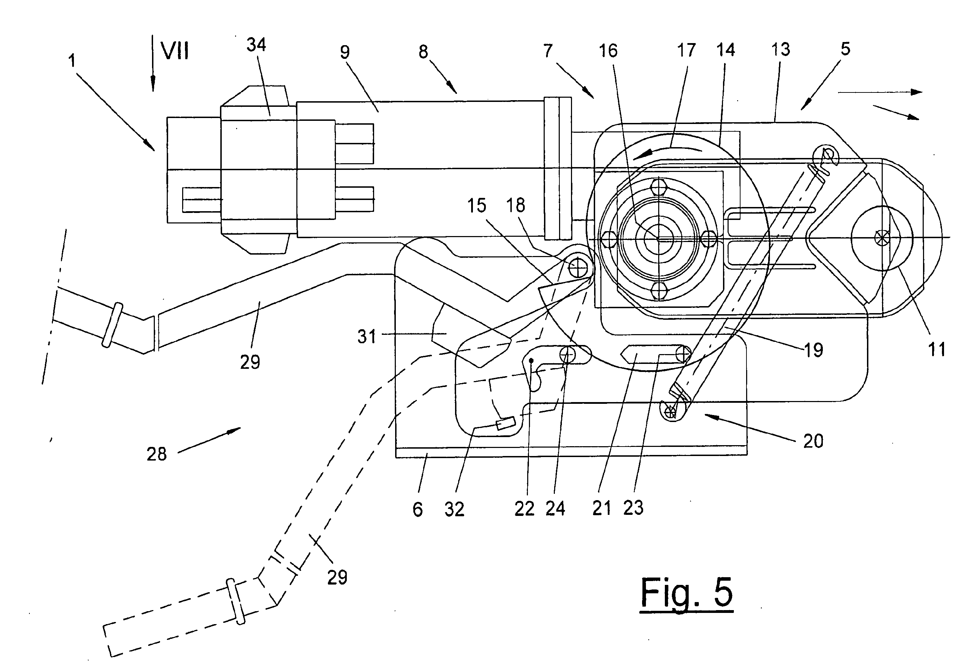

Die Führung (20) besteht zwischen dem Gestell (13) der Antriebseinheit (5) und der Konsole (6). Hierfür sind in den zwei Ausführungsbeispielen von Figur 1 bis 4 und Figur 5 bis 8 zwei verschiedene Ausführungsformen dargestellt und nachfolgend näher beschrieben. In der ersten Variante von Figur 1 bis 4 ist die Führung (20) als reine Schiebeführung ausgebildet. In der Variante von Figur 5 bis 8 handelt es sich um eine kombinierte Schiebe- und Schwenkführung.

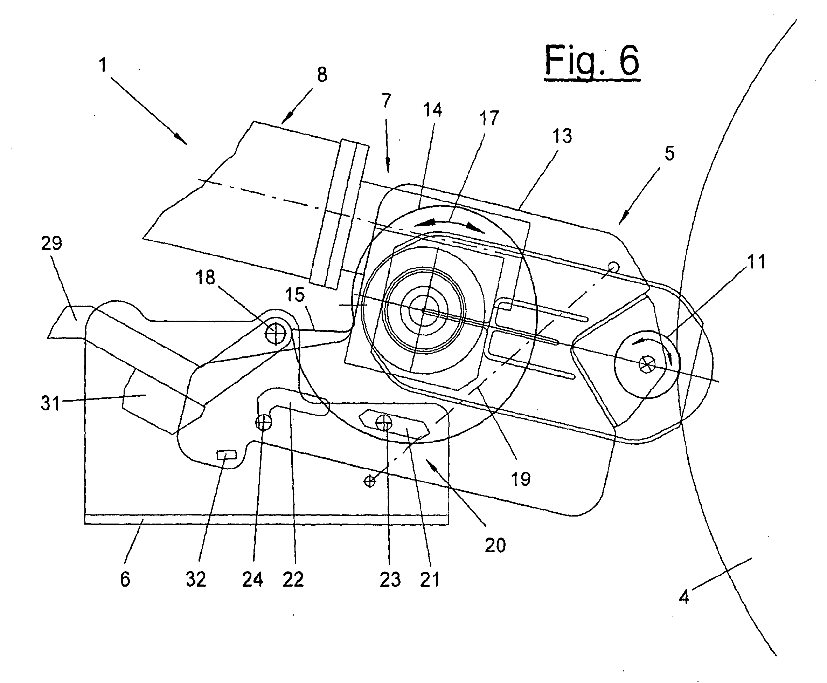

Die Zustellvorrichtung (7) dient dazu, die Antriebseinheit (5) aus der jeweils in Figur 1 und 5 dargestellten zurückgezogenen Ruheposition in die in Figur 2 und 6 dargestellte Betriebsstellung und Eingriffsposition am Fahrzeugrad (4) zu bringen. In der Ruhestellung ist das Antriebselement (11) vom Fahrzeugrad (4) seitlich distanziert. Figur 1 bis 4 und Figur 5 bis 8 geben auch zwei Varianten der Zustellvorrichtung (7) wieder.

Der Fahrzeuganhängerrangierantrieb (1) umfasst ferner noch eine Rückstelleinrichtung (28) mit einem manuell oder per Fuß betätigbaren Stellhebel (29), mit der die Antriebseinheit (5) aus der Betriebsstellung zurück in die Ruhestellung gebracht werden kann. Hierfür geben Figur 1 bis 4 und Figur 5 bis 8 ebenfalls zwei verschiedene Ausführungsformen wieder.

In der Ausführungsform von Figur 1 ist die Antriebseinheit (5) in Ruhestellung mit den beiden Achsen (12,16) ungefähr in Höhe der Achse des Fahrzeugrades (4) angeordnet. Die beiden Achsen (12,16) liegen hierbei ebenfalls vorzugsweise auf gleicher Höhe nebeneinander. Die Konsole (6) erstreckt sich ebenfalls parallel zur Unterseite des Fahrgestells (3). Der Motor (9) ist liegend angeordnet.

Die Zustellvorrichtung (7) beinhaltet in beiden Ausführungsformen eine Kurvenscheibe (14), die auf der Achse (16) bzw. der Abtriebswelle des Motors (9) bzw. des Getriebes aufgesteckt ist. Bei Betätigung des Antriebs (8) dreht sich somit die Kurvenscheibe (14) mit. Die Kurvenscheibe (14) hat einen spiralförmigen oder schneckenförmigen Außenumfang, wobei die Spiralform im gezeigten Ausführungsbeispiel rechtsgängig ist. Der Radius der Kurvenscheibe (14) vergrößert sich daher im Uhrzeigersinn über die 360° Umfangswinkel bis zu einem stufenförmigen Anschlag (15) zwischen dem innen liegenden Anfang und dem außen liegenden Ende der Spiral- oder Schneckenlinie.

Die Kurvenscheibe (14) wirkt an ihrem Außenumfang mit einem quer liegendem Bolzen (18) zusammen, an dem sie sich bei ihrer Drehbewegung (17) abwälzt und abstützt. Der Bolzen (18) ist mit der Konsole (6) verbunden, wobei die beiden Ausführungsbeispiele unterschiedliche Verbindungsvarianten zeigen. Der Bolzen (18) ist vorzugsweise parallel zur Achse (16) der Kurvenscheibe (14) ausgerichtet.

In der Ausführungsform von Figur 1 ist der Bolzen (18) höhenbeweglich an der Konsole (6) angeordnet. Er befindet sich im Kniegelenk (26) eines an beiden Seiten der Antriebseinheit (5) angeordneten Kniehebels (25). Der in Figur 1 linke Hebel ist über einen Lagerstift (27) unverschieblich und drehbar an einem Ansatz der Konsole (6) gelagert. Der zweite rechte Hebel besitzt am Ende einen quer liegenden Führungsstift (23), indem er in ein horizontales Langloch (21) an einem Ansatz der Konsole (6) greift. Dieses Langloch ist Bestandteil der Führung (20). Bei einer Hebe- und Senkbewegung des Bolzens (18) bzw. des Kniegelenks (26) wird der Führungsstift (23) entsprechend horizontal im Langloch (21) verschoben.

Bei Betätigung des Antriebs (8) wird zugleich mit der Reibwalze (11) auch die Kurvenscheibe (14) in Drehung gesetzt, wobei die beiden Komponenten gleichsinnig drehen. Für die Zustellbewegung erfolgt eine Drehung in Drehrichtung (17), wobei der Radius der Kurvenscheibe (14) sich zunehmend vergrößert. Im ersten Abschnitt der Spiralform über einen Winkel von z. B. 45° kann die Außenkontur der Kurvenscheibe (14) zunächst kreisbogenförmig um die Achse (16) ausgebildet sein, um erst anschließend in die Spiralform oder Schneckenform überzugehen.

In der Figur 1 gezeigten Ausführungsform befindet sich der Bolzen (18)zunächst am Anfang der vorzugsweise zunächst kreisbogenförmigen Spiral- oder Schneckenkontur vor dem Anschlag (15). Durch die Drehung in der in Figur 1 gezeigten gegen den Uhrzeigersinn gerichteten Drehrichtung (17) drückt die Kurvenscheibe (14) mit einem immer größer werdenden Radius auf den vorzugsweise drehbar gelagerten Bolzen (18). Dieser wird mit zunehmenden Drehweg unter Mitnahme des Kniehebels (25) nach unten gedrückt, wodurch der Führungsstift (23) im Langloch (21) horizontal nach rechts zum Fahrzeugrad (4) hin verschoben wird. Der Führungsstift (23) ist mit dem Gestell (13) der Antriebseinheit (5) verbunden, so dass diese über die Kurvenscheibendrehung einen horizontalen Vorschub erhält. Das Gestell (13) kann hierbei außerdem liegend auf der planen Grundplatte der Konsole (6) geführt sein.

Der Vorschub erfolgt gegen die Kraft einer rückstellenden Feder (19), die zwischen der Konsole (6) und dem Gestell (13) eingehängt ist. Die Feder (19) ist als Zugfeder ausgerichtet und hat durch ihre schräg nach hinten gerichtete Lage eine Andrückkomponente auf die Konsole (6) und gleich eine Rückzugkomponente in die Ausgangs- oder Ruhestellung für die Antriebseinheit (5).

Der Kniehebel (25) ist in seiner Geometrie in Abstimmung mit der Kurvenscheibe (14) so ausgebildet, dass der Totpunkt des Kniehebels (25) am Ende der Spiralform und beim größten Radius der Kurvenscheibe (14) erreicht ist. Durch den Schwung der Kurvenscheibe (14) und die rückstellende Kraft der Feder (19) sowie die Reaktionskraft des elastisch verformten Fahrzeugrads (4) wird der Totpunkt übersprungen, so dass der Kniehebel (25) nach unten in eine Sperrstellung schnappt, in der der Bolzen (18) von der Kurvenscheibe (14) abgelöst wird. Die Sperrstellung wird durch die Federkraft und die Reaktionskraft des Fahrzeugrades (4) gesichert. In dieser Stellung kann die Kurvenscheibe (14) sich im Rangierbetrieb hinderungsfrei mit dem Antriebselement (11) mitdrehen. In dieser gesicherten Zustellposition kann das Fahrzeugrad (4) in beliebiger Weise bewegt und rangiert werden.

Der Stellhebel (29) der Rückstelleinrichtung (28) ist über ein Drehlager (30) an der Konsole (6) gelagert, wobei das Drehlager (30) sich vorzugsweise mit geringem Abstand unterhalb des Lagerstiftes (27) für den Kniehebel (25) befindet. Am vorderen Ende trägt der Stellhebel (29) einen schalenförmigen Mitnehmer (31), auf dem in der Sperrstellung des Kniehebels (25) der Bolzen (18) bzw. das Kniegelenk (26) zu liegen kommt. Wenn der Stellhebel (29) aus seiner zunächst gemäß Figur 1 horizontalen Lage verschwenkt wird, was z. B. durch einen Tritt mit dem Fuß geschehen kann, wird der Mitnehmer (31) nach oben geschwenkt und schiebt den Bolzen (18) mit dem Kniehebel (25) aus der Sperrstellung. Hierdurch wird zugleich die Führung (20) betätigt, so dass die Antriebseinheit (5) zurückgezogen wird und in der Endstellung des Stellhebels (29) die in Figur 1 dargestellte Rückzugstellung wieder einnimmt. Der Stellhebel (29) kehrt anschließend durch Federkraft oder auf andere geeignete Weise in seine Ausgangsstellung zurück.

Die Rückstelleinrichtung (28) besitzt eine Verschiebeeinrichtung (33) mit der der Bolzen (18) bei der Rückstellbewegung axial verschoben werden kann und außer Eingriff mit der Kurvenscheibe (14) gebracht wird. Die Verschiebeeinrichtung (33) ist der Übersicht halber in Figur 3 und 4 nur schematisch angedeutet. Sie besteht zum Beispiel aus einer konsolenfesten Anlaufschräge mit einer Querkomponente, an der der Stellhebel (29) bei der Betätigung aufgleitet und hierbei zusammen mit dem Bolzen (18) in Richtung der Achse (16) nach hinten verschoben wird. Der Bolzen (18) kann dadurch auch an einer ungünstig stehenden Kurvenscheibe (14) vorbei in die in Figur 1 gezeigt Höhenposition gebracht werden, wobei er mit seinen Stirnende an der Rückseite der Kurvenscheibe (14) gemäß Figur 4 anliegt. Die Anlaufschräge ist in der Höhe begrenzt und wirkt mit einer rückstellenden Feder am Stellhebel (29) oder am Bolzen (18) zusammen, so dass am Ende der Rückstellbewegung der Bolzen (18) wieder zurück in die Ausgangsposition unter Federkraft schnappen kann, sobald die Kurvenscheibe (14) dies erlaubt. Wenn nämlich die Kurvenscheibe (14) mit ihrem außen liegenden Spiralende und dem großen Radius nach unten weist, kann dank der Verschiebeeinrichtung (33) der Bolzen (18) in der Aufwärtsbewegung um die Kurvenscheibe (14) herumgelenkt werden. In dieser Stellung arretiert sich die Zustellvorrichtung durch die Federkräfte von selbst. Sobald eine erneute Zustellung erfolgen soll und die Kurvenscheibe (14) sich dreht, schleift sie so lange an der Stirnseite des Bolzens (18) entlang, bis der Spiralanfang und der minimale Radius Kurvenscheibe (14) erreicht ist. In dieser Position kann der Bolzen (18) durch die rückstellende Feder wieder nach vorn gleiten und hierdurch wieder in Kontakt mit dem Spiral- oder Schneckenumfang der Kurvenscheibe (14) gelangen. Anschließend beginnt wieder der vorbeschriebene Zustellvorgang. Wenn die Kurvenscheibe (14) bei der Rückstellung des Fahrzeuganhängerrangierantriebs (1) eine günstige Stellung wie in Figur 1 besitzt, kann der Bolzen (18) in seine Endstellung gleich wieder nach vorn rutschen und die in Figur 1 gezeigte Ausgangsposition einnehmen.

In der Variante von Figur 5 bis 8 ist der Bolzen (18) an zwei hochstehenden Seitenwangen der Konsole (6) relativ ortsfest gehalten. Er kann sich wegen der vorerwähnten Verschiebeeinrichtung (33) axial gegen eine Rückstellfeder ein Stück bewegen und kann sich außerdem gegebenenfalls um seine Längsachse drehen. Der Bolzen (18) kann jedoch keine seitlichen Verschiebebewegungen ausführen und ist insofern gegenüber der drehenden Kurvenscheibe (14) relativ ortsfest.

Die Führung (20) ist in diesem Ausführungsbeispiel als kombinierte Schiebe- und Schwenkführung ausgebildet. Sie besitzt auf beiden Seiten des Fahrzeuganhängerrangierantriebs (5) in den Wangen der Konsole (6) hintereinander angeordnete Langlöcher (21,22), das dem Fahrzeugrad benachbarte Langloch (21) hat eine gerade Form und erstreckt sich horizontal und parallel zur Grundplatte der Konsole (6). Das zweite rückwärtige Langloch (22) hat eine gebogene Form, wobei es einen horizontalen Abschnitt und einen rückseitig anschließenden nach unten angewinkelten vertikalen oder schrägen Abschnitt besitzt. Der horizontale Abschnitt fluchtet mit dem ersten Langloch (21). In beiden Langlöchern (21,22) sind jeweils Führungsstifte (23,24) angeordnet, die mit dem Gestell (13) an der Antriebseinheit (5) verbunden sind. Der vordere Führungsstift (23) im geraden Langloch (21) wirkt hierbei in der nachfolgend beschriebenen Weise als Drehlager für die Schwenkbewegung der Antriebseinheit (5).

Bei ihrer Drehung wälzt sich die Kurvenscheibe (14) auf dem relativ ortsfesten Bolzen (18) ab, wobei über die geraden Abschnitte der Langlöcher (21,22) das Gestell (13) nach vorn zum Fahrzeugrad (4) hin verschoben wird. Bei dieser Ausgestaltung kann die Reibwalze (11) etwas unterhalb der Achse des Fahrzeugrades (4) angeordnet sein. Sobald die Reibwalze (11) ihrer ebenfalls gegen den Uhrzeigersinn gerichteten Drehbewegung (17) in Kontakt mit dem Fahrzeugrad (4) kommt, wandert sie durch die Reaktionskräfte am Fahrzeugrad (4) nach unten, wodurch das Gestell (13) um den Führungsstift (23) abwärts gekippt oder geschwenkt wird. Im Moment der Drehung hat auch der Führungsstift (24) den Knickpunkt am gebogenen Langloch (22) erreicht, so dass er im Vollzug der Drehbewegung in den vertikalen oder schräg nach unten abgewinkelten Langlochabschnitt eingreifen kann.

Bei Beginn der Drehbewegung überfährt auch die Kurvenscheibe (14) mit ihrem außen liegenden Ende der Spiralform den Bolzen (18) und kommt in Folge der Schwenkbewegung vom Bolzen (18) frei. Die Antriebseinheit (5) nimmt dann die in Figur 6 dargestellte Betriebsstellung ein, in der sich die Kurvenscheibe (14) und die Reibwalze (11) beliebig behinderungsfrei drehen können. Die Schwenkstellung des Gestells (13) wird gesichert durch die rückstellende Kraft der Feder (19) und die Reaktionskraft des Fahrzeugrades (4) in Verbindung mit der Form der Führung (20). Die Langlöcher (21,22) befinden sich unterhalb der Reibwalze (11), so dass die Reaktionskraft des Fahrzeugrades (4) ein rückstellendes Moment um den Führungs- und Lagerstift (23) ausübt, welches die Schwenkstellung sichert.

Die Rückstelleinrichtung (28) besitzt bei dieser Variante ebenfalls einen per Hand oder Fuß tätigbaren Stellhebel (29) mit einem Mitnehmer (31), der bei dieser Ausführungsform als Kulissenstück ausgebildet ist. Der Stellhebel (29) ist mit dem Bolzen (18) fest oder drehbar verbunden, wobei zumindest in Richtung der Achse (16) eine feste Verbindung per Anschlag oder dergleichen und eine Mitnahmefunktion besteht. Der Mitnehmer (31) wirkt mit einem Anschlag (32) am rückwärtigen Ende des Gestells (13) zusammen. Bei der Hebeldrehung drückt der Mitnehmer (31) über den Anschlag (32) das Gestell (13) am hinteren Ende nach unten, so dass in einer Rückschwenkbewegung die gesperrte Betriebsstellung gelöst wird und der Führungsstift (24) wieder zum Knickpunkt des langgebogenen Langlochs (22) wandert. Aus dieser Horizontalstellung kann die Feder (19) die Antriebseinheit (5) wieder in die in Figur 5 dargestelle Ausgangsstellung zurückholen.

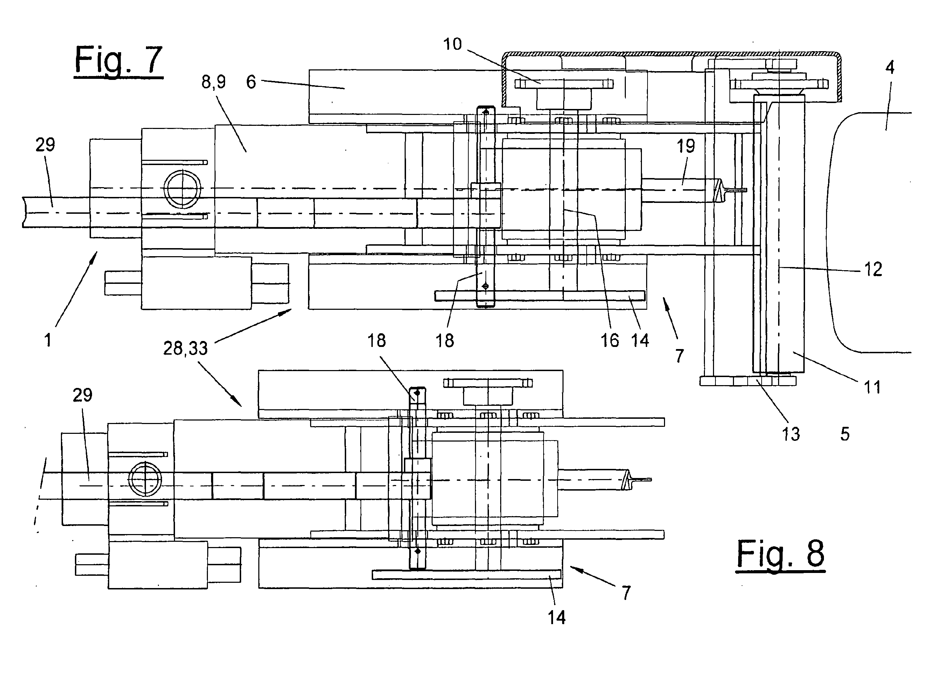

Wie Figur 7 in einer Draufsicht gemäß Pfeil VII von Figur 5 in Verbindung mit Figur 8 zeigt, ist auch bei diesem Ausführungsbeispiel eine federbelastete Verschiebeeinrichtung (33) vorhanden, mit der der Bolzen (18) bei der Rückstellung zurückgezogen und hinter die Kurvenscheibe (14) gebracht wird. Hierbei gleitet der Stellhebel (29) wiederum an einer konsolenfesten Anlaufschräge (nicht dargestellt) auf und wird mit samt dem Bolzen (18) gegen die Kraft einer Rückstellfeder seitlich die in Figur 8 zeigte und im vorstehenden Ausführungsbeispiel beschriebene Zugstellung gebracht. Abwandlungen der gezeigten Ausführungsformen sind in verschiedener Weise möglich. Dies betrifft zum einen die Gestaltung der Antriebseinheit, den Antrieb und Antriebselement. Diese kann beliebig variieren. Außer einem Reibradantrieb sind auch beliebige andere Antriebsgestaltungen mit z. B. einem formschlüssig eingreifenden und zustellbaren Zahnradantrieb oder dergleichen möglich. Ferner können die Führungen (20) ihre Gestaltung und ihre Zuordnung von Langlöchern und Führungsstiften variieren. Statt einer Kurvenscheibe (14) kann auch ein anderes geeignetes drehendes Zustellorgan verwendet werden, welches am Ende der Zustellbewegung frei läuft.

### BEZUGSZEICHENLISTE

- 1: Fahrzeuganhängerrangierantrieb
- 2: Fahrzeug, Anhänger
- 3: Fahrgestell, Rahmen
- 4: Fahrzeugrad
- 5: Antriebseinheit
- 6: Konsole
- 7: Zustellvorrichtung
- 8: Antrieb
- 9: Motor
- 10: Übertragungseinrichtung, Kettentrieb
- 11: Antriebselement, Reibwalze
- 12: Achse
- 13: Gestell
- 14: Kurvenscheibe
- 15: Anschlag
- 16: Achse
- 17: Drehrichtung
- 18: Bolzen
- 19: Feder
- 20: Führung
- 21: Langloch gerade
- 22: Langloch gebogen
- 23: Führungsstift
- 24: Führungsstift
- 25: Kniehebel
- 26: Kniegelenk
- 27: Lagerstift
- 28: Rückstelleinrichtung
- 29: Stellhebel
- 30: Drehlager
- 31: Mitnehmer
- 32: Anschlag
- 33: Verschiebeinrichtung
- 34: Fernsteuerung, Empfänger

## Patentansprüche

1. Fahrzeuganhängerrangierantrieb bestehend aus einer an einer fahrzeugfesten Konsole (6) mittels einer Führung (20) beweglich gelagerten und an das Fahrzeugrad (4) zustellbaren Antriebseinheit (5) mit einem Motor (9) und einem Antriebselement (11), **dadurch gekennzeichnet, dass** der Fahrzeuganhängerrangierantrieb (1) eine automatische und von der Antriebseinheit (5) betätigte Zustellvorrichtung (7) mit einem vom Motor (9) angetriebenen drehenden Zustellorgan aufweist, welches am Ende der Zustellbewegung frei läuft.

2. Fahrzeuganhängerrangierantrieb nach Anspruch 1, **dadurch gekennzeichnet, dass** die Zustellvorrichtung (7) eine sicherbare Zustellposition des Antriebselement (11) am Fahrzeugrad (4) aufweist, in der das Antriebselement (11) beliebig drehbar ist.

3. Fahrzeuganhängerrangierantrieb nach Anspruch 1oder 2, **dadurch gekennzeichnet, dass** die Zustellvorrichtung (7) eine vom Motor (9) angetriebene Kurvenscheibe (14) aufweist, die mit einem mit der Konsole (6) verbundenen Bolzen (18) zusammenwirkt.

4. Fahrzeuganhängerrangierantrieb nach Anspruch 1, 2 oder 3, **dadurch gekennzeichnet, dass** die Kurvenscheibe (14) einen spiralförmigen Außenumfang aufweist und durch Drehung und Radiuszunahme unter Abstützung am Bolzen (18) einen Vorschub bewirkt.

5. Fahrzeuganhängerrangierantrieb nach einem der vorhergehenden Ansprüche, **dadurch gekennzeichnet, dass** der Bolzen (18) an der Konsole (6) relativ ortsfest bezüglich der Drehbewegung der Kurvenscheibe (14) gelagert ist.

6. Fahrzeuganhängerrangierantrieb nach einem der vorhergehenden Ansprüche, **dadurch gekennzeichnet, dass** die Führung (20) als kombinierte Schiebe- und Schwenkführung ausgebildet ist und gerade sowie abgewinkelte Langlöcher (21,22) mit Führungsstiften (23,24) aufweist.

7. Fahrzeuganhängerrangierantrieb nach einem der Ansprüche 1 bis 4, **dadurch gekennzeichnet, dass** der Bolzen (18) an einem an der Konsole (6) angeordneten Kniehebel (25) gelagert ist.

8. Fahrzeuganhängerrangierantrieb nach Anspruch 7, **dadurch gekennzeichnet, dass** der Bolzen (18) das Kniegelenk (26) bildet.

9. Fahrzeuganhängerrangierantrieb nach Anspruch 6 oder 7, **dadurch gekennzeichnet, dass** die Führung (20) als Schiebeführung mit geraden Langlöchern (21) und einem abtriebseitig am Kniehebel (25) angeordneten Führungsstift (23) ausgebildet ist.

10. Fahrzeuganhängerrangierantrieb nach einem der vorhergehenden Ansprüche, **dadurch gekennzeichnet, dass** zwischen der Antriebseinheit (5) und der Konsole (6) eine rückstellende Feder (19) angeordnet ist.

11. Fahrzeuganhängerrangierantrieb nach einem der vorhergehenden Ansprüche, **dadurch gekennzeichnet, dass** der Fahrzeuganhängerrangierantrieb (1) eine manuell oder per Fuß betätigbare Rückstelleinrichtung (28) aufweist.

12. Fahrzeuganhängerrangierantrieb nach einem der vorhergehenden Ansprüche, **dadurch gekennzeichnet, dass** die Rückstelleinrichtung (28) einen an der Konsole (6) gelagerten Stellhebel (29) mit einem auf die Antriebseinheit (5) einwirkenden Mitnehmer (31) aufweist.

13. Fahrzeuganhängerrangierantrieb nach Anspruch 12, **dadurch gekennzeichnet, dass** der Stellhebel (29) an dem konsolenfesten Bolzen (18) befestig ist, wobei der Mitnehmer (31) mit einem Anschlag (32) an der Antriebseinheit (5) zusammenwirkt.

14. Fahrzeuganhängerrangierantrieb nach Anspruch 12, **dadurch gekennzeichnet, dass** der Stellhebel (29) an der Konsole (6) drehbar gelagert (30) ist, wobei der Mitnehmer (31) auf den Bolzen (18) am Kniehebel (25) einwirkt.

15. Fahrzeuganhängerrangierantrieb nach einem der vorhergehenden Ansprüche, **dadurch gekennzeichnet, dass** die Rückstelleinrichtung (28) eine Verschiebeeinrichtung (33) zum axialen Verstellen des Bolzens (18) aufweist.

16. Fahrzeuganhängerrangierantrieb nach einem der vorhergehenden Ansprüche, **dadurch gekennzeichnet, dass** der Fahrzeuganhängerrangierantrieb (1) eine Fernsteuerung (34) aufweist.

17. Fahrzeuganhängerrangierantrieb nach einem der vorhergehenden Ansprüche, **dadurch gekennzeichnet, dass** das Antriebselement (11) der Antriebseinheit (5) als Reibwalze ausgebildet und mit dem Motor (9) mittels einer Übertragungseinrichtung (10), vorzugsweise einem Kettentrieb, verbunden ist.

18. Fahrzeuganhängerrangierantrieb nach einem der vorhergehenden Ansprüche, **dadurch gekennzeichnet, dass** die Kurvenscheibe (14) und das Ritzel der Übertragungseinrichtung (10) fluchtend auf der Abtriebswelle des Motors (9) angeordnet sind.

## Claims

1. Vehicle trailer manoeuvring drive composed of a drive unit (5), which drive unit (5) is movably mounted by means of a guide (20) on a bracket (6) which is fixed with respect to the vehicle and which drive unit (5) can be applied against the vehicle wheel (4) and has a motor (9) and a drive element (11),
**characterized in that** the vehicle trailer manoeuvring drive (1) has an automatic application device (7) which is actuated by the drive unit (5) and which has an application member which is driven in rotation by the motor (9) and which runs freely at the end of the application movement.

2. Vehicle trailer manoeuvring drive according to Claim 1,
**characterized in that** the application device (7) has a lockable application position of the drive element (11) against the vehicle wheel (4), in which application position the drive element (11) can be rotated in any desired manner.

3. Vehicle trailer manoeuvring drive according to Claim 1 or 2, **characterized in that** the application device (7) has a cam disc (14) which is driven by the motor (9) and which interacts with a bolt (18) which is connected to the bracket (6).

4. Vehicle trailer manoeuvring drive according to Claim 1, 2 or 3, **characterized in that** the cam disc (14) has a spiral-shaped outer periphery and, by means of a rotation and an increase in radius while being supported on the bolt (18), generates a feed motion.

5. Vehicle trailer manoeuvring drive according to one of the preceding claims, **characterized in that** the bolt (18) is mounted on the bracket (6) so as to be relatively positionally fixed with respect to the rotational motion of the cam disc (14).

6. Vehicle trailer manoeuvring drive according to one of the preceding claims, **characterized in that** the guide (20) is embodied as a combined sliding and pivoting guide and has straight and angled slots (21, 22) with guide pins (23, 24).

7. Vehicle trailer manoeuvring drive according to one of Claims 1 to 4, **characterized in that** the bolt (18) is mounted on a knee lever (25) which is arranged on the bracket (6).

8. Vehicle trailer manoeuvring drive according to Claim 7, **characterized in that** the bolt (18) forms the knee joint (26).

9. Vehicle trailer manoeuvring drive according to Claim 6 or 7, **characterized in that** the guide (20) is embodied as a sliding guide with straight slots (21) and with a guide pin (23) which is arranged at the drive output side on the knee lever (25).

10. Vehicle trailer manoeuvring drive according to one of the preceding claims, **characterized in that** a restoring spring (19) is arranged between the drive unit (5) and the bracket (6).

11. Vehicle trailer manoeuvring drive according to one of the preceding claims, **characterized in that** the vehicle trailer manoeuvring drive (1) has a restoring device (28) which can be actuated manually or by foot.

12. Vehicle trailer manoeuvring drive according to one of the preceding claims, **characterized in that** the restoring device (28) has an actuating lever (29) which is mounted on the bracket (6) and which has a driver (31) which acts on the drive unit (5).

13. Vehicle trailer manoeuvring drive according to Claim 12, **characterized in that** the actuating lever (29) is fastened to the bolt (18) which is fixed with respect to the bracket, with the driver (31) interacting with a stop (32) on the drive unit (5).

14. Vehicle trailer manoeuvring drive according to Claim 12, **characterized in that** the actuating lever (29) is rotatably mounted (30) on the bracket (6), with the driver (31) acting on the bolt (18) on the knee lever (25).

15. Vehicle trailer manoeuvring drive according to one of the preceding claims, **characterized in that** the restoring device (28) has a displacement device (33) for axially adjusting the bolt (18).

16. Vehicle trailer manoeuvring drive according to one of the preceding claims, **characterized in that** the vehicle trailer manoeuvring drive (1) has a remote control (34).

17. Vehicle trailer manoeuvring drive according to one of the preceding claims, **characterized in that** the drive element (11) of the drive unit (5) is embodied as a friction roller and is connected to the motor (9) by means of a transmission device (10), preferably a chain drive.

18. Vehicle trailer manoeuvring drive according to one of the preceding claims, **characterized in that** the cam disc (14) and the pinion of the transmission device (10) are arranged in an aligned fashion on the drive output shaft of the motor (9).

## Revendications

1. Dispositif d'entraînement pour la manoeuvre d'une remorque consistant en une unité d'entraînement (5) disposée de façon mobile au niveau d'une console (6) fixée au véhicule à l'aide d'un guide (20) et pouvant être approchée au niveau de la roue du véhicule (4) avec un moteur (9) et un élément d'entraînement (11), **caractérisé en ce que** le dispositif d'entraînement pour la manoeuvre d'une remorque (1) comporte un dispositif d'approche (7) automatique entraîné par l'unité d'entraînement (5) avec un organe d'approche entraîné par le moteur (9) et en roue libre à la fin du mouvement d'approche.

2. Dispositif d'entraînement pour la manoeuvre d'une remorque selon la revendication 1, **caractérisé en ce que** le dispositif d'approche (7) comporte une position d'approche de l'élément d'entraînement (il) sécurisable au niveau de la roue du véhicule (4) dans laquelle l'élément d'entraînement (11) peut être tourné de façon quelconque.

3. Dispositif d'entraînement pour la manoeuvre d'une remorque selon la revendication 1 ou 2, **caractérisé en ce que** le dispositif d'approche (7) comporte un disque courbe (14) entraîné par le moteur (9) qui interagit avec un boulon (18) relié à la console (6).

4. Dispositif d'entraînement pour la manoeuvre d'une remorque selon la revendication 1, 2 ou 3, **caractérisé en ce que** le disque courbe (14) comporte un périmètre extérieur en forme de spirale qui entraîne un mouvement d'avance par rotation et augmentation du rayon en appuyant sur le boulon (18).

5. Dispositif d'entraînement pour la manoeuvre d'une remorque selon l'une quelconque des revendications précédentes, **caractérisé en ce que** le boulon (18) est disposé fixement par rapport au mouvement de rotation du disque courbe (14) au niveau de la console (6).

6. Dispositif d'entraînement pour la manoeuvre d'une remorque selon l'une quelconque des revendications précédentes, **caractérisé en ce que** le guide (20) prend la forme d'un guide coulissant et pivotant combiné et comporte des trous oblongs (21, 22) droits et incurvés avec des tiges de guidage (23, 24).

7. Dispositif d'entraînement pour la manoeuvre d'une remorque selon l'une quelconque des revendications 1 à 4, **caractérisé en ce que** le boulon (18) est disposé au niveau d'un levier coudé (25) disposé au niveau de la console (6).

8. Dispositif d'entraînement pour la manoeuvre d'une remorque selon la revendication 7, **caractérisé en ce que** le boulon (18) forme l'articulation coudée (26).

9. Dispositif d'entraînement pour la manoeuvre d'une remorque selon la revendication 6 ou 7, **caractérisé en ce que** le guide (20) prend la forme d'un guide coulissant avec des trous oblongs (21) droits et une tige de guidage (23) disposée côté sortie d'entraînement au niveau du levier coudé (25).

10. Dispositif d'entraînement pour la manoeuvre d'une remorque selon l'une quelconque des revendications précédentes, **caractérisé en ce qu'**un ressort (19) de rappel est disposé entre l'unité d'entraînement (5) et la console (6).

11. Dispositif d'entraînement pour la manoeuvre d'une remorque selon l'une quelconque des revendications précédentes, **caractérisé en ce que** le dispositif d'entraînement pour la manoeuvre d'une remorque (1) comporte un dispositif d'alignement (28) pouvant être actionné à la main ou au pied.

12. Dispositif d'entraînement pour la manoeuvre d'une remorque selon l'une quelconque des revendications précédentes, **caractérisé en ce que** le dispositif d'alignement (28) comporte un levier de réglage (29) disposé au niveau de la console (6) avec un taquet d'entraînement (31) agissant sur l'unité d'entraînement (5).

13. Dispositif d'entraînement pour la manoeuvre d'une remorque selon la revendication 12, **caractérisé en ce que** le levier de réglage (29) est fixé à un boulon (18) fixé à la console, le taquet d'entraînement (31) interagissant avec une butée (32) au niveau de l'unité d'entraînement (5).

14. Dispositif d'entraînement pour la manoeuvre d'une remorque selon la revendication 12, **caractérisé en ce que** le levier de réglage (29) est disposé (30) de façon tournante au niveau de la console (6), le taquet d'entraînement (31) agissant sur le boulon (18) au niveau du levier coudé (25).

15. Dispositif d'entraînement pour la manoeuvre d'une remorque selon l'une quelconque des revendications précédentes, **caractérisé en ce que** le dispositif d'alignement (28) comporte un dispositif d'ajustement (33) pour l'ajustement axial du boulon (18).

16. Dispositif d'entraînement pour la manoeuvre d'une remorque selon l'une quelconque des revendications précédentes, **caractérisé en ce que** le dispositif d'entraînement pour la manoeuvre d'une remorque (1) comporte une télécommande (34).

17. Dispositif d'entraînement pour la manoeuvre d'une remorque selon l'une quelconque des revendications précédentes, **caractérisé en ce que** l'élément d'entraînement (11) de l'unité d'entraînement (5) prend la forme d'un cylindre de frottement et est relié au moteur (9) à l'aide d'un dispositif de transmission (10), de préférence une transmission à chaîne.

18. Dispositif d'entraînement pour la manoeuvre d'une remorque selon l'une quelconque des revendications précédentes, **caractérisé en ce que** le disque courbe (14) et le pignon du dispositif de transmission (10) sont disposés de façon alignée sur l'arbre de sortie d'entraînement du moteur (9).
